# EUROPEAN PATENT SPECIFICATION

(11) **EP 2 774 519 B1**
(45) Date of publication and mention of the grant of the patent: **01.02.2017**
(21) Application number: 14155180.4
(22) Date of filing: 14.02.2014
(51) Int. Cl.: A47K 3/30

(54) **Shower door assembly**
Duschtüranordnung
Ensemble de porte de douche

(30) Priority: 05.03.2013 CN 201320099190 U; 15.04.2013 GB 201306825
(43) Date of publication of application: 10.09.2014
(73) Proprietor: Foshan Ideal Co., Ltd., 528515 Guangdong (CN)
(72) Inventor: Wei, Wuxiang, 528515 Foshan (CN)
(74) Representative: McCartney, Jonathan William

(56) References cited:
- EP-A1- 0 327 154
- EP-A1- 2 742 837
- CN-Y- 2 760 163
- DE-U1- 8 201 839
- US-A1- 2013 025 232

## Description

### FIELD OF THE INVENTION

The invention relates to a shower door assembly, in particular, although not exclusively, to the mounting of the shower door assembly.

### BACKGROUND OF THE INVENTION

Conventional shower doors are normally mounted to a wall surface by drilling the stationary and movable frames and then connecting both frames using fasteners. This procedure is very inconvenient and time-consuming. Furthermore, the drilling operation may cause damage or may score or scratch the frames, which are usually made of aluminium or its alloys, which is not acceptable for users.

CN2760163 discloses a shower door assembly according to the preamble of claim 1.

### SUMMARY OF THE INVENTION

It is desirable to provide a shower door assembly that can be easily assembled without the need for drilling or any other tools.

The invention is defined in the attached independent claim to which reference should now be made. Further, optional features may be found in the sub-claims appended thereto.

According to the invention there is provided a shower door assembly which comprises a stationary frame, a movable frame having an opening, a top frame, a bottom frame and at least one adjusting assembly, wherein the at least one adjusting assembly comprises an adjusting block located between the stationary frame and the movable frame and received within the stationary frame, a fixing block located within the top frame or bottom frame, and a fastener, wherein the adjusting block has a slot and fixing block has a through hole, such that the fastener can pass through the through hole and the slot to connect the adjusting block to the fixing block.

The adjusting block comprises a base portion received in the stationary frame and an adjusting rod, and the slot is provided on the adjusting rod. The slot may be elongate and the adjusting rod may be elongate. The slot may extend substantially in the same direction as the adjusting rod. The base portion is received in the stationary frame by various possible methods such as adhering, screwing etc. The movement of the adjusting rod with respect to the fixing block is indicative of the movement of the adjusting frame with respect to the stationary frame.

The adjusting rod has an engaging portion and the fixing block has a guiding portion matching (corresponding) with the engaging portion when the adjusting rod is moved in relation to the fixing block.

The engaging portion and the guiding portion may be in two different forms matching (or corresponding) with each other. As defined in the attached independent claim, according to the invention the engaging portion has an edge with a V-shape section and the guiding portion has a matching (or corresponding) V-shape groove, such that the V-shape edge can engage with the V-shape groove; or the engaging portion has an edge with an arc shaped section and the guiding portion has a matching (or corresponding) arc-shape groove, such that the edge is receivable in the groove.

A fixing groove may be formed on the stationary frame. The base portion may have slots at both sides such that the adjusting block is slidable within the fixing groove.

The fastener of the adjusting assembly may be engaged with the slot in one of many ways. The diameter of the slot may be less than that of the fastener such that the fastener is only engaged with the slot when a force is applied to the fastener.

The top (or bottom) frame may be provided with a notch within which the fixing block resides (or is disposed). In this way, the fixing block may be completely concealed in the top/bottom frame and may not visible from outside.

By aligning the through hole of the fixing block with different points of the slot of the adjusting block, the movable frame can be positioned at different distances from the stationary frame. When a desirable distance is achieved, the position of the through hole with respect to the slot may be fixed by using the fastener by passing the fastener through the through hole and engaging it with the slot.

The shower door assembly may have two adjusting assemblies, one disposed at each end of the frames.

By using the invention, when the shower door is assembled, there is no need for drilling or any other particular tools. The shower door can be assembled or disassembled by using only one or two fasteners, especially screws. Therefore, the assembly of the shower door is very convenient and less time-consuming.

### BRIEF DESCRIPTION OF THE DRAWINGS

Further advantages and details of the invention emerge from the example embodiments described below, which do not limit the invention in any way, and from the drawings, in which
Figure 1 shows an exploded view of the main parts of a shower door assembly according to one example of the invention;
Figure 2 shows a top frame according to one example of the invention;
Figure 3 shows a stationary frame according to one example of the invention;
Figure 4 shows a perspective view of an exemplified adjusting block;
Figure 5 shows the enlarged view of the section A indicated in Figure 1;
Figure 6 shows the enlarged view of the section B indicated in Figure 4;
Figure 7 shows the enlarged view of the section C indicated in Figure 1;
Figure 8 shows an exemplified fixing block of the invention;

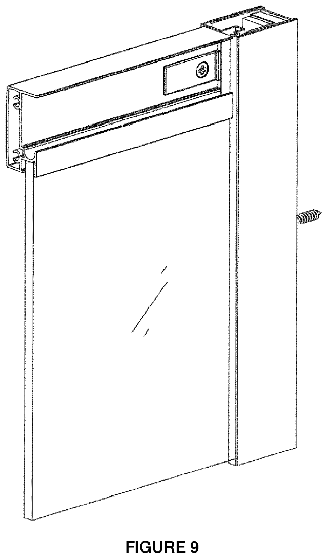

Figure 9 shows the shower door in an assembled state.

Elements that are irrelevant to the scope of invention defined by the appended claims are omitted for clarity.

### DETAILED DESCRIPTION OF THE INVENTION

The terminology used herein is for the purpose of describing particular embodiments only and is not intended to be limiting of example embodiments of the invention. As used herein, the singular forms "a," "an," and "the," are intended to include the plural forms as well, unless the context clearly indicates otherwise. As used herein, the terms "and/or" include any and all combinations of one or more of the associated listed items. It will be further understood that the terms "comprises" "comprising" "includes" and/or "including" when used herein, specify the presence of stated features, integers, steps, operations, elements, and/or components, but do not preclude the presence or addition of one or more other features, integers, steps, operations, elements, components, and/or groups thereof.

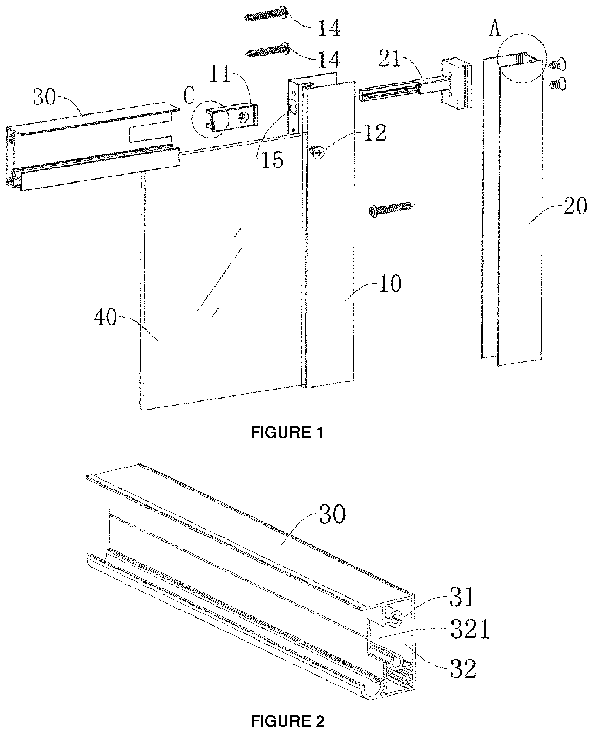

**Figure 1** shows the main parts of an exemplified shower door. The shower door comprises a stationary frame 20, a movable frame 10 having an opening 15, a top frame 30, a bottom frame (not shown) and a glass door 40. The shower door further comprises an adjusting assembly substantially comprising an adjusting block 21, a fixing block 11 and a fastener for connecting the adjusting block 21 and the fixing block 11. There may be two adjusting assemblies, with one disposed at the top and the other disposed at the bottom.

The top frame 30 and the bottom frame are disposed at opposite ends of, and extending perpendicular to, the movable frame 10. The top and bottom frames are detachably connected to the movable frame 10 by suitable ways. In the present example, as shown in **Figure 2****,** the top frame 30 has a hole 31, and the movable frame 10 has a corresponding through hole. The top frame 30 is connected to the movable frame 10 by a fastener passing through the hole 31 and the through hole.

Disposed between the top and bottom frames is a glass door panel 40. The adjusting block 21 is disposed between the stationary frame 20 and the adjusting frame 10. The fixing block 11 is disposed within the top frame 30. The adjusting block 21 can pass through the opening 15 in the movable frame and can engage with the fixing block 11. The adjusting block 21 is secured to the fixing block 11 by a fastener, which will be explained in more detail hereinafter.

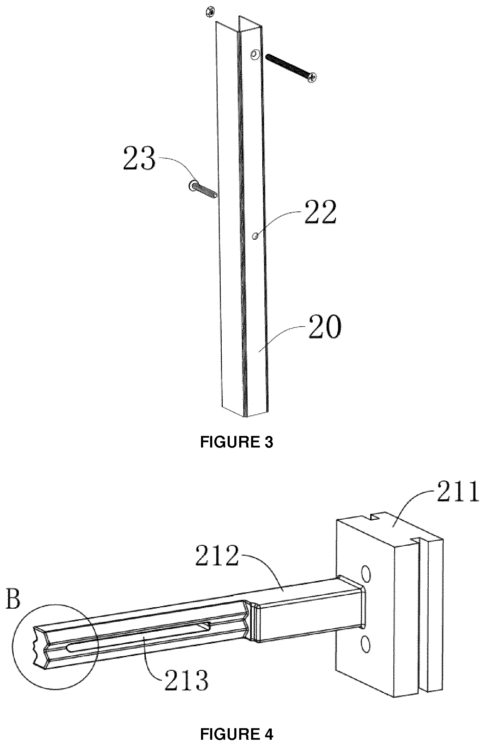

The stationary frame 20 is U shaped and is arranged to be secured to a wall surface. The stationary frame 20 can be attached to a wall through many ways. Figure 3 shows one exemplified stationary frame 20. The stationary frame 20 in Figure 3 comprises a screw hole 22, such that fasteners (such as screw 23) can pass through it to fix the stationary frame 20 to the wall. Of course, a person skilled in the art will appreciate that other methods could be used to secure the stationary frame 20 to a wall or the like, for example, an adhesive could be used.

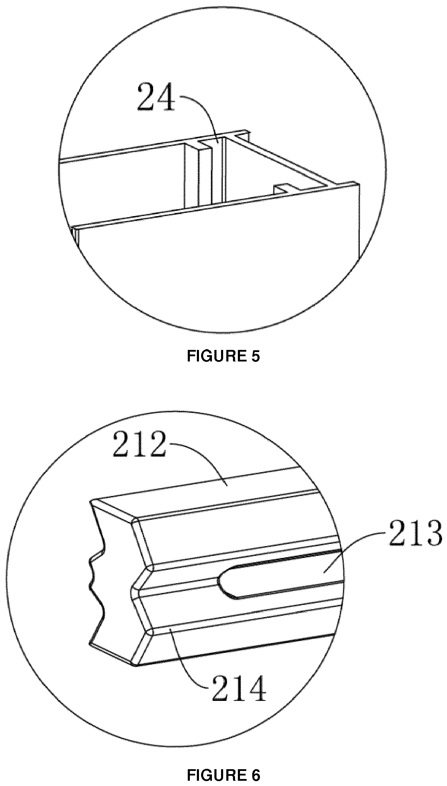

The adjusting block 21 is partially received within the stationary frame 20. As shown in Figure 4, which shows an exemplified adjusting block 21, the block 21 comprises a base portion 211 and an adjusting rod 212 having a slot 213. The slot 213 extends in the same direction as the elongate adjusting rod 212. With reference to Figures 1 and 5, a fixing groove 24 is formed on the stationary frame 20 in which the base portion 211 can be inserted. The base portion 211 can be connected to the stationary frame 20 through many ways such as adhering, screwing and other suitable methods. The distance between the movable frame 10 and the stationary frame 20 can be adjusted by the movement of the adjusting rod 212 in relation to the fixing block 11.

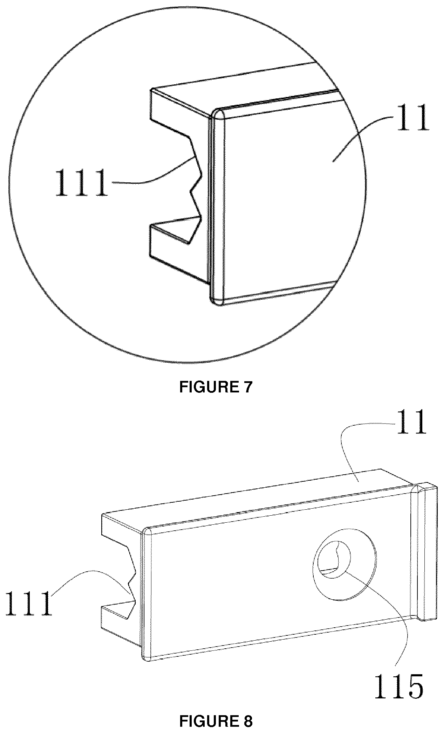

In the invention, with reference to **Figures 4****,** **6****,** **7 and 8****,** the adjusting rod 212 has an engaging portion 214, and the fixing block 11 has a guiding portion 111 matching with the engaging portion 214 to prevent the adjusting rod 212 from shifting in the vertical direction during movement (i.e. to prevent relative vertical movement between the adjusting rod 212 and the fixing block 11). In **Figures 1****,** **4****,** **6** **and** **7****,** exemplified engaging portion and guiding portion are shown. The engaging portion is a V-shape edge and the guiding portion is a V-shape groove such that the edge matches with the groove to prevent the adjusting rod from shifting. The person skilled in the art can appreciate the other arc-shaped design of the guiding and engaging portions that are able to achieve the same function.

As shown in Figure 2, the top frame 30 is formed with a space 32 which is formed by a notch 321 in the frame 30. The fixing block 11 is received within the notch 321 such that it is not visible from the outside. The adjusting block 21 passes through an opening in the movable frame 10 and is inserted into the notch 321.

When the shower door is assembled, the adjusting block 21 is connected to the stationary frame 20 and then the stationary frame 20 is secured to a wall surface. In another aspect, the fixing block 11 is mounted to the space 32 of the top frame 30, then the top frame 30 is connected with the movable frame 10 by screws 14. When the movable frame 10 is moved towards the stationary frame 20, the adjusting rod 212 passes through the opening in the movable frame 10 and enters into the V-shape groove of the fixing block 11. As the relative position between the stationary frame 20 and the movable frame 10 changes, the position of the through hole 115 of the fixing block 11 relative to the slot 213 of the adjusting block 21 also changes. When the appropriate or desired relative position between the two frames is achieved, a fastener is inserted into the through hole 115 of the fixing block 11 and is engaged with the slot 213, such as by partially inserting it into the slot 213. In this way, the fixing block 11 and the adjusting block 21 are securely connected. The relative position between the two frames is thus fixed.

It should be understood that various example embodiments have been described with reference to the accompanying drawings in which only some example embodiments are shown. Specific structural and functional details disclosed herein are merely representative for purposes of describing example embodiments. The invention, however, may be embodied in many alternate forms within the scope that is defined by the appended claims.

## Claims

1. A shower door assembly, comprising:
a stationary frame (20);
a movable frame (10) having an opening (15);
a top frame (30) and a bottom frame; and
at least one adjusting assembly, wherein each of the at least one adjusting assembly comprises:
an adjusting block (21) located between the stationary frame (20) and the movable frame (10) and receivable in the stationary frame (20);
a fixing block (11) and
a fastener;
wherein the adjusting block (21) has a slot (213) and the fixing block (11) has a through hole such that the fastener can pass through the through hole and the slot (213) to connect the adjusting block (21) to the fixing block (11);
wherein the adjusting block (21) comprises a base portion (211) received in the stationary frame (20); **characterised in that** the fixing block (11) is recevable within the top or bottom frame, **in that** the adjusting block comprises further an adjusting rod (212), wherein
the slot (213) is provided on the adjusting rod (212); **in that** the adjusting rod (212) has an engaging portion (214) and the fixing block (11) has a guiding portion (111) matching with the engaging portion (214); and **in that**:
the engaging portion (214) is a V-shape edge and the guiding portion (111) is a V-shape groove matching with the V-shape edge; or
the engaging portion (214) is an arc-shaped edge and the guiding portion (111) is an arc-shaped groove matching with the arc-shaped edge.

2. The shower door assembly of claim 1, wherein the slot (213) is elongate and the adjusting rod (212) is elongate, and wherein the slot (213) extends in substantially the same direction as the adjusting rod (212).

3. The shower door assembly of claim 1 or 2, wherein the stationary frame (20) has a fixing groove (24) for receiving the base portion (211) of the adjusting block (21).

4. The shower door assembly of any preceding claim, wherein the base portion (211) of the adjusting block (21) has slots at both sides.

5. The shower door assembly of any preceding claim, wherein the top frame (30) has a space for receiving the fixing block (11).

6. The shower door assembly of any preceding claim, wherein the fastener is a screw.

7. The shower door assembly of any preceding claim, wherein there are two adjusting assemblies located at opposite ends of the movable and stationary frame (20).

## Patentansprüche

1. Duschtürbausatz, umfassend:
einen festen Rahmen (20);
einen beweglichen Rahmen (10) mit einer Öffnung (15);
einen oberen Rahmen (30) und einen unteren Rahmen; und
wenigstens einen Einstellbausatz, wobei jeder des wenigstens einen Einstellbausatzes Folgendes umfasst:
einen Justierkörper (21), angeordnet zwischen dem festen Rahmen (20) und
dem beweglichen Rahmen (10) und in dem festen Rahmen (20) aufnehmbar;
einen Befestigungsblock (11) und ein Befestigungselement;
wobei der Justierkörper (21) einen Schlitz (213) aufweist und der Befestigungsblock (11) eine Durchgangsöffnung hat, so dass das Befestigungselement durch die Durchgangsöffnung und den Schlitz (213) hindurchgehen und den Justierkörper (21) mit dem Befestigungsblock (11) verbinden kann;
wobei der Justierkörper (21) einen Basisabschnitt (211) umfasst, der in dem festen Rahmen (20) aufgenommen wird, **dadurch gekennzeichnet, dass** der Befestigungsblock (11) im oberen oder unteren Rahmen aufnehmbar ist, dass der Justierkörper des Weiteren eine Einstellstange (212) umfasst, wobei der Schlitz (213) auf der Einstellstange (212) angeordnet ist,
dass die Einstellstange (212) einen Einrastabschnitt (214) aufweist, und der Befestigungsblock (11) einen Führungsabschnitt (111) aufweist, der mit dem Einrastabschnitt (214) zusammenpasst; und
dass der Einrastabschnitt (214) eine V-förmige Kante und der Führungsabschnitt (111) eine V-förmige Nut hat, die mit der V-förmigen Kante zusammenpasst; oder
der Einrastabschnitt (214) eine bogenförmige Kante und der Führungsabschnitt (111) eine bogenförmige Nut hat, die mit der bogenförmigen Kante zusammenpasst.

2. Duschtürbausatz gemäß Anspruch 1, wobei der Schlitz (213) länglich und die Einstellstange (212) länglich ist, wobei sich der Schlitz (213) im Wesentlichen in die gleiche Richtung wie die Einstellstange (212) erstreckt.

3. Duschtürbausatz gemäß Anspruch 1 oder 2, wobei der feste Rahmen (20) eine Befestigungsnut (24) zur Aufnahme des Basisabschnitts (211) des Justierkörpers (21) aufweist.

4. Duschtürbausatz gemäß einem beliebigen der vorhergehenden Ansprüche, wobei der Basisabschnitt (211) des Justierkörpers (21) auf beiden Seiten Schlitze hat.

5. Duschtürbausatz gemäß einem beliebigen der vorhergehenden Ansprüche, wobei der obere Rahmen (30) Raum für die Aufnahme des Befestigungsblocks (11) hat.

6. Duschtürbausatz gemäß einem beliebigen der vorhergehenden Ansprüche, wobei das Befestigungselement eine Schraube ist.

7. Duschtürbausatz gemäß einem beliebigen der vorhergehenden Ansprüche, wobei es zwei Einstellbausätze gibt, die an den gegenüberliegenden Enden des beweglichen und festen Rahmens (20) angeordnet sind.

## Revendications

1. Ensemble de porte de douche, comprenant :
un châssis fixe (20) ;
un cadre mobile (10) ayant une ouverture (15) ;
un cadre supérieur (30) et un cadre inférieur ; et
au moins un ensemble de réglage, dans lequel chacun d'au moins un ensemble de réglage comprend :
un bloc de réglage (21) situé entre le cadre fixe (20) et le cadre mobile (10) et
pouvant être reçu dans le cadre fixe (20) ;
un bloc de fixation (11)
un élément de fixation ;
dans lequel le bloc de réglage (21) présente une fente (213) et le bloc de fixation (11) présente un trou traversant de sorte que l'élément de fixation peut traverser le trou traversant et la fente (213) pour relier le bloc de réglage (21) au bloc de fixation (11 ) ;
dans lequel
le bloc de réglage (21) comprend une partie de base (211) reçue dans le cadre fixe (20) ; **caractérisé en ce que** le bloc de fixation (11) est recevable dans le cadre supérieur ou inférieur, **en ce que** le bloc de réglage comprend en outre une tige de réglage (212), dans lequel
la fente (213) est prévue sur la tige de réglage (212) ;
**en ce que**
la tige de réglage (212) présente une partie d'engagement (214) et le bloc de fixation (11) présente une partie de guidage (111) qui s'accorde avec la partie d'engagement (214) ; et
**en ce que**
la partie d'engagement (214) est un bord en forme de V et la partie de guidage (111) est une rainure en forme de V correspondant au bord en forme de V ; ou la partie d'engagement (214) est un bord en forme d'arc et la partie de guidage (111) est une rainure en forme d'arc correspondant au bord en forme d'arc.

2. L'ensemble de porte de douche selon la revendication 1, dans lequel la fente (213) est allongée et la tige de réglage (212) est allongée, et dans lequel la fente (213) s'étend sensiblement dans le même sens que la tige de réglage (212).

3. L'ensemble de porte de douche selon la revendication 1 ou 2, dans lequel le cadre fixe (20) comporte une rainure de fixation (24) pour recevoir la partie de base (211) du bloc de réglage (21).

4. L'ensemble de porte de douche selon l'une quelconque des revendications précédentes, dans lequel la partie de base (211) du bloc de réglage (21) présente des fentes des deux côtés.

5. L'ensemble de porte de douche selon l'une quelconque des revendications précédentes, dans lequel le cadre supérieur (30) a un espace pour recevoir le bloc de fixation (11).

6. L'ensemble de porte de douche selon l'une quelconque des revendications précédentes, dans lequel l'élément de fixation est une vis.

7. L'ensemble de porte de douche selon l'une quelconque des revendications précédentes, dans lequel il y a deux ensembles de réglage situés aux extrémités opposées du cadre mobile et stationnaire (20).
